# EUROPÄISCHE PATENTSCHRIFT

(11) **EP 4 155 082 B1**
(45) Veröffentlichungstag und Bekanntmachung des Hinweises auf die Patenterteilung: **27.08.2025**
(21) Anmeldenummer: 21199532.9
(22) Anmeldetag: 28.09.2021
(51) Int. Cl.: B41J 2/165, B41J 3/407, B41J 11/00, G06K 15/02

(54) **DIGITALDRUCKEINRICHTUNG, VERFAHREN ZUM HERSTELLEN UND BEDRUCKEN EINES WERKSTÜCKS, SYSTEM ZUR BEREITSTELLUNG VON BEDRUCKTEN WERKSTÜCKEN**
DIGITAL PRINTING DEVICE, METHOD FOR PRODUCING AND PRINTING A WORKPIECE, SYSTEM FOR PROVIDING PRINTED WORKPIECES
DISPOSITIF D'IMPRESSION NUMÉRIQUE, PROCÉDÉ DE FABRICATION ET D'IMPRESSION D'UNE PIÈCE, SYSTÈME DE FOURNITURE DES PIÈCES IMPRIMÉES

(43) Veröffentlichungstag der Anmeldung: 29.03.2023
(73) Patentinhaber: Hinterkopf GmbH, 73054 Eislingen/Fils (DE)
(72) Erfinder: WEBER, Joachim, 73342 Bad Ditzenbach (DE); SCHULZ, Joachim, 73326 Deggingen (DE)
(74) Vertreter: Patentanwälte Magenbauer & Kollegen Partnerschaft mbB

(56) Entgegenhaltungen:
- EP-A1- 2 762 317
- CN-A- 111 788 523
- DE-A1- 102019 135 176
- DE-B4- 102014 012 218
- JP-A- 2010 143 200

## Beschreibung

Die Erfindung betrifft eine Digitaldruckeinrichtung, ein Verfahren zum Herstellen und Bedrucken eines Werkstücks sowie ein System zur Bereitstellung von bedruckten Werkstücken. Aus der EP 3 473 446 B1 ist ein Digitaldruckeinrichtung bekannt, die ein Druckkopfmodul und ein Farbwerk umfasst, wobei das Farbwerk für eine Bereitstellung einer Druckfarbe an das Druckkopfmodul ausgebildet ist und wobei ein Druckkopfträger eine Trägerschnittstelle umfasst, die für eine Kopplung mit einer Druckkopfschnittstelle ausgebildet ist, wobei die Druckwerkaufnahme, die Druckwerkschnittstelle, das Farbwerk, die Druckkopfschnittstelle, die Trägerschnittstelle und das Druckkopfmodul eine längs der Druckrichtung angeordnete Reihenanordnung ausbilden, wobei in einem in vertikaler Richtung unterhalb einer Werkstückebene angeordneten Abschnitt wenigstens ein Farbspeicher und ein Trocknungsmodul angeordnet sind.

Die EP 2 762 317 A1 beschreibt eine Vorrichtung gemäß dem Oberbegriff des Anspruchs 1 zum Bedrucken von Behältern, die mindestens eine Druckebene umfasst, wobei in jeder Druckebene entlang eines äußeren Umfangs eines Freiraums, der dazu ausgelegt ist, einen Behälter aufzunehmen, mindestens ein Druckkopf zum Aufbringen von Farbe auf den Behälter angeordnet ist. Zudem ist in mindestens einer Druckebene mindestens eine UV-Lampe zum Aushärten von auf den Behälter aufgebrachter Farbe angeordnet.

Die JP 2010143200 A offenbart ein Verfahren für eine mehrfarbige Bedruckung eines zylindrischen Körpers durch ein Tintenstrahlsystem ohne Ausbluten der Tinte, wobei eine Vielzahl von Tintenstrahlköpfen zum Einspritzen von Tröpfchen ultraviolett härtbarer Tinte auf einen zylindrischen Körper, der von oben auf einen Dorn aufgesetzt ist, so angeordnet sind, dass sie in einer Richtung orthogonal zur axialen Richtung des Dorns ausgerichtet sind und ein Bestrahlungsteil einer ersten Ultraviolett-Bestrahlungsvorrichtung zum Emittieren von ultravioletten Strahlen in einer Position angeordnet ist, die dem Tintenstrahlkopf über den Dorn gegenüberliegt, wobei der Bestrahlungsteil und der Dorn gleichzeitig in der Richtung orthogonal zur axialen Richtung des Dorns in der gleichen Richtung um den gleichen Abstand beweglich. Ferner sind eine zweite Ultraviolett-Bestrahlungsvorrichtung und eine Vorrichtung zum Auftragen eines transparenten Beschichtungsmaterials in der Bewegungsrichtung des Dorns und des Bestrahlungsteils angeordnet.

Die DE 102019135176 A1 beschreibt ein Verdampfersystem zum Verdampfen einer Zusammensetzung, umfassend ein erstes Element umfassend zumindest eine mit einer elektrischen Energiequelle verbundene Strahlenquelle, die dazu eingerichtet ist, elektromagnetische Strahlung zu emittieren, und ein zweites Element umfassend zumindest ein Reservoir zur Aufnahme der Zusammensetzung und zumindest einen Absorber, wobei das erste und das zweite Element reversibel und zerstörungsfrei lösbar miteinander verbindbar sind und wobei ein Strahlungsleiter so angeordnet ist, dass bei Verbindung des ersten und des zweiten Elements miteinander eine strahlenleitende Verbindung zwischen der Strahlenquelle und dem Absorber gebildet wird, wobei das Verdampfersystem dazu eingerichtet ist, die Zusammensetzung durch die vom Absorber durch Umwandlung aus der elektromagnetischen Strahlung erhaltene thermische Energie und/oder die vom Absorber emittierte elektromagnetische Strahlung mit gegenüber der absorbierten elektromagnetischen Strahlung erhöhter Wellenlänge zu verdampfen.

Die CN 111 788 523 A offenbart ein Verfahren zur Herstellung eines Films durch Belichtung eines Beschichtungsfilms aus einer lichtempfindlichen Harzzusammensetzung und anschließende Entwicklung des belichteten Beschichtungsfilms, wodurch das Muster des Films eine hohe Auflösung aufweisen kann, wobei das Verfahren zur Herstellung des Films die Bildung eines Beschichtungsfilms aus einer lichtempfindlichen Harzzusammensetzung, die Belichtung des Beschichtungsfilms durch Bestrahlung des Beschichtungsfilms mit von einer Lichtquelle emittiertem Licht und die anschließende Entwicklung des belichteten Beschichtungsfilms mit einer alkalischen Lösung umfasst und wobei das auf den Beschichtungsfilm zu emittierende Licht als Licht mit einer bestimmten Wellenlänge bereitgestellt wird.Die Aufgabe der Erfindung besteht darin, eine Digitaldruckeinrichtung, ein Verfahren zum Herstellen und Bedrucken eines Werkstücks sowie ein System zu zur Bereitstellung von bedruckten Werkstücken anzugeben, mit denen eine Verlängerung von Reinigungsintervallen, innerhalb derer Reinigungsarbeiten zur Aufrechterhaltung der Funktion des Druckkopfs durchgeführt werden müssen, bewirkt werden kann.

Diese Aufgabe wird gemäß einem ersten Aspekt durch eine Digitaldruckeinrichtung nach Anspruch 1 gelöst.

Bei einer derartigen Digitaldruckeinrichtung ist vorgesehen, dass das Werkstück für einen begrenzten Zeitraum im Arbeitsraum ortsfest angeordnet ist und eine Rotationsbewegung vollzieht, wobei eine Rotationsachse des Werkstücks quer zur Druckrichtung ausgerichtete ist. Hierdurch wird die Erzeugung eines großflächen Druckbilds auf der Außenoberfläche des Werkstücks ermöglicht. Typischerweise weist der Druckkopf wenigstens eine Tintendüsenreihe auf, die mehrere linienförmig und in gleicher Teilung beabstandete Tintendüsen umfasst, wobei jede der Tintendüsen für eine individuelle Abgabe von Tintentröpfchen in der Druckrichtung ausgebildet ist. Durch die Rotationsbewegung des Werkstücks kann somit eine Vielzahl von parallel zueinander ausgerichteten Tintentröpfchenreihen auf die Außenoberfläche des Werkstücks abgegeben werden und damit das Druckbild erzeugt werden. Das Druckbild kann somit eine Ausdehnung aufweisen, die ein Vielfaches einer Linienbreite der von den Tintendüsen des Druckkopfs abgegebenen Tintentröpfchenreihe ist.

Die Rotation des Werkstücks bewirkt eine Relativbewegung des Druckbereichs gegenüber der Trocknungseinheit, so dass die auf die Außenoberfläche des Werkstücks aufgebrachten Tintentröpfchen in den Einflussbereich der elektromagnetischen Wellen der Trocknungseinheit gelangen, so dass die entsprechend abgestimmte Drucktinte durch photochemische Polymerisation ausgehärtet wird.

Prinzipiell wird davon ausgegangen, dass die Trocknungseinheit gegenüberliegend zum Druckkopf angeordnet ist, da hierdurch eine vorteilhafte Abschirmwirkung für die von der Trocknungseinheit bereitgestellten elektromagnetischen Wellen durch das im Arbeitsraum angeordnete Werkstück bewirkt werden kann. Vorteilhaft ist es, wenn ein Mittelpunktstrahl der Strahlungsquelle der Trocknungseinrichtung entgegengesetzt parallel zur Druckrichtung für die Tintentröpfchen ausgerichtet ist. Besonders vorteilhaft ist es, wenn der Mittelpunktstrahl und die Druckrichtung koaxial zueinander angeordnet sind.

Dementsprechend können die von der Trocknungseinrichtung bereitgestellten elektromagnetischen Wellen prinzipiell den Druckkopf erreichen, wodurch eine unerwünschte Aushärtung der Drucktinte und damit eine Verstopfung der Tintendüsen des Druckkopfs eintreten würden. In der Praxis wird die Trocknungseinheit derart betrieben, dass eine Abgabe von elektromagnetischen Wellen nur für den Fall vorgesehen ist, dass ein Werkstück im Arbeitsraum angeordnet ist, durch dessen Vorhandensein ein optischer Pfad zwischen der wenigstens einen Strahlungsquelle und dem Druckdüsen des Druckkopfs unterbrochen ist.

Allerdings treten bei manchen Werkstücken, die aus Werkstoffen hergestellt sind, die gewisse Lichtleitungseigenschaften aufweisen, unerwünschte Weiterleitungen von elektromagnetischen Wellen ausgehend von der Strahlungsquelle bis zum Druckkopf auf, so dass hierdurch eine unerwünschte Aushärtung von Drucktinte am Druckkopf eintreten kann.

Erfindungsgemäß ist daher vorgesehen, dass die Trocknungseinheit mit wenigstens einer Strahlungsquelle, insbesondere ausschließlich mit Strahlungsquellen, ausgerüstet ist, die elektromagnetische Wellen mit einem Intensitätsmaximum bei einer Wellenlänge von 395 Nanometer bereitstellt bzw. bereitstellen. Durch die Nutzung einer derartigen Strahlungsquelle, deren elektromagnetische Strahlen dem Bereich des ultravioletten Lichts zuzuordnen sind, wird aufgrund der kurzen Wellenlängen eine Weiterleitung der elektromagnetischen Strahlen im Werkstück, das in der Art eines Lichtleiters wirken kann, im Vergleich zu längerwelligem Licht reduziert oder verhindert.

Dementsprechend tritt am Druckkopf keine Strahlungsintensität auf, die zur Aushärtung der Drucktinte am Druckkopf führen könnte, so dass durch diese Maßnahmen das Risiko einer Verstopfung der Tintendüsen durch unerwünschte Aushärtung der Drucktinte erheblich reduziert wird. In der Folge kann ein Reinigungsintervall, das den zeitlichen Abstand zwischen zwei Reinigungsvorgängen für den Druckkopf beschreibt, im Vergleich zu anderen Trocknungseinheiten, die längerwelligere elektromagnetische Wellen bereitstellen, verlängert werden.

Vorteilhafte Weiterbildungen der Erfindung sind Gegenstand der Unteransprüche.

Vorteilhaft ist es, wenn die Strahlungsquelle als Leuchtdiode mit einem Halbleiter aus der Gruppe: Aluminiumnitrid (AlN), Aluminiumgalliumnitrid (AlGaN), Aluminiumgalliumindiumnitrid (AlGaInN), Diamant (C), versehen ist, der zur Bereitstellung monochromatischer elektromagnetischer Wellen ausgebildet ist. Prinzipiell ist davon auszugehen, dass eine Leuchtdiode mit einem der vorgenannten Halbleiter zur Abgabe von monochromatischer Licht ausgebildet ist, allerdings kommt es aufgrund von Wechselwirkungen des vom Halbleiter bereitgestellten Lichts mit umgebenden Materialien zu einer Verbreiterung des Wellenlängenspektrums, das von der Leuchtdiode bereitgestellt wird.

Bei einer Weiterbildung der Erfindung ist vorgesehen, dass die Strahlungsquelle bei 50 Prozent der maximalen Strahlungsintensität für eine Bereitstellung von elektromagnetischen Wellen in einem Wellenlängenintervall von weniger als 13 Nanometer und/oder bei 25 Prozent der maximalen Strahlungsintensität für eine Bereitstellung von elektromagnetischen Wellen in einem Wellenlängenintervall von weniger als 20 Nanometer ausgebildet ist. Dies bedeutet, dass die Strahlungsquelle elektromagnetische Wellen mit einer schmalbandigen Wellenlängenverteilung abgibt, so dass ausgehend von derjenigen Wellenlänge, die das Intensitätsmaximum für die Strahlungsquelle bestimmt und die bei einer Leuchtdiode der Wellenlänge des vom Halbleiter abgegebenen monochromatischen Lichts entspricht, insbesondere längerwellige elektromagnetische Wellen nur mit sehr geringer Intensität bereitgestellt werden. Somit kann in Kombination mit der Verwendung einer entsprechend abgestimmten Drucktinte, deren Polymerisation nur bei Bestrahlung mit kurzwelligen elektromagnetischen Wellen ausgelöst wird und unter Berücksichtigung des Umstands, dass aufgrund der kurzen Wellenlängen keine relevante Weiterleitung der elektromagnetischen Wellen durch das Werkstück erfolgt, ein Trocknen von Tinte direkt am Druckkopf vermieden werden.

In weiterer Ausgestaltung der Erfindung ist vorgesehen, dass der Kurzpassfilter (19) als Absorptionsfilter oder als dichroditischer Filter ausgebildet ist und/oder dass der Kurzpassfilter (19) eine Cut-Off-Wellenlänge größer als 390 Nanometer, insbesondere eine Cut-Off-Wellenlänge größer als 370 Nanometer, aufweist.

Mit einem entsprechend abgestimmten Kurzpassfilter werden Wellenlängen, die von der Strahlungsquelle abgegeben und vom Werkstück bis zum Druckkopf geleitet werden könnten, zumindest weitgehend, vorzugsweise nahezu vollständig, insbesondere vollständig blockiert und ermöglichen dadurch eine Vergrößerung der Gestaltungsfreiheit für das Werkstück. Diese Gestaltungsfreiheit betrifft insbesondere die Werkstoffauswahl, da bei der Verwendung eines derartigen Kurzpassfilters weniger Augenmerk darauf gerichtet werden muss, dass das Werkstück als solches eine Absorption unerwünschter Wellenlängen gewährleistet. Dies ist insbesondere bei Kunststoffmaterialien von Bedeutung, die ansonsten mit einem geeigneten Absorber ausgerüstet werden müssen, der jedoch sowohl zur Kostensteigerung als auch zur Veränderung von Materialeigenschaften des jeweiligen Kunststoffmaterials führen kann.

Vorteilhaft ist es, wenn der Druckkopfträger an einem Maschinengestell festgelegt ist, an dem eine Fördereinrichtung für Werkstücke, insbesondere ein drehbar am Maschinengestell gelagerter Werkstückrundtisch, angeordnet ist, wobei die Fördereinrichtung für eine Bereitstellung eines Werkstücks in den Arbeitsraum sowie für eine Rotation des Werkstücks im Arbeitsraum um eine quer zur Druckrichtung ausgerichtete Rotationsachse ausgebildet ist. Hierdurch wird eine Digitaldruckeinrichtung geschaffen, die für eine Bedruckung von großen Stückzahlen von Werkstücken in kurzer Zeit genutzt werden kann. Hierbei ist der Druckkopfträger vorzugsweise ortsfest an einem Maschinengestell festgelegt, an dem gegebenenfalls auch eine Reihe von weiteren Arbeitsstationen wie beispielsweise weitere Druckkopfträger und/oder Einrichtungen zur Vorbehandlung oder Nachbehandlung von Werkstücken vor bzw. nach der Durchführung von Druckvorgängen vorgesehen sein können.

Bevorzugt ist vorgesehen, dass die Fördereinrichtung für eine Förderung der Werkstücke entlang eines geradlinigen oder kreisbogenabschnittsförmigen Förderwegs ausgebildet ist und hierbei eine Schrittbewegung für die jeweiligen Werkstücke vollzieht, also eine Abfolge einer Bewegung des Werkstücks während einer Bewegungsphase und einem Stillstand des Werkstücks während einer Bearbeitungsphase, insbesondere während der Bedruckung.

Dementsprechend ist vorgesehen, dass die Werkstücke jeweils im Arbeitsraum verharren und hierbei eine Rotation um eine Rotationsachse durchführen, wobei die Rotationsachse quer zur Druckrichtung ausgerichtet ist. Durch diese Maßnahme kann gewährleistet werden, dass beispielsweise eine ringförmig ausgebildete Außenumfangsfläche des Werkstücks, die koaxial zur Rotationsachse angeordnet ist, zumindest teilweise bedruckt werden kann.

Die Aufgabe der Erfindung wird durch ein Verfahren zum Herstellen und Bedrucken eines Werkstücks nach Anspruch 6 gelöst.

Bei einer Weiterbildung des Verfahrens ist vorgesehen, dass bei der Rotation des Werkstücks um die Rotationsachse ein Abstand zwischen der Außenoberfläche des Werkstücks, die mit dem Druckbild versehen wird, und dem Druckkopf konstant ist. Vorzugsweise ist vorgesehen, dass das Werkstück zumindest im Bereich des Druckbilds rotationssymmetrisch gestaltet ist. Besonders bevorzugt ist vorgesehen, dass das gesamte Werkstück rotationssymmetrisch, insbesondere in der Art einer kreiszylindrischen Hülse, ausgebildet ist.

Die Aufgabe der Erfindung wird durch ein System zur Bereitstellung von bedruckten Werkstücken gelöst, das eine erfindungsgemäße Digitaldruckeinrichtung sowie Werkstücke umfasst, wobei die Werkstücke aus einem Glasmaterial hergestellt sind, das in einem Wellenlängenbereich kleiner 400 Nanometer eine optische Transmission für elektromagnetische Wellen von weniger als 25 Prozent, bevorzugt weniger als 15 Prozent, in sonder von weniger als 5 Prozent aufweist und/oder mit Werkstücken, die aus einem Kunststoff hergestellt sind.

Eine vorteilhafte Ausführungsform der Erfindung ist in der Zeichnung dargestellt. Hierbei zeigt:
- Figur 1: eine streng schematische Seitenansicht auf eine Digitaldruckeinrichtung mit einem Druckkopfträger, einem Druckkopf, einer Trocknungseinheit sowie einem Werkstück, das auf einer drehbar gelagerten Spindel aufgenommen ist, und
- Figur 2: eine streng schematische Vorderansicht auf die Digitaldruckeinrichtung gemäß der Figur 1, wobei der Druckkopfträger nicht dargestellt ist.

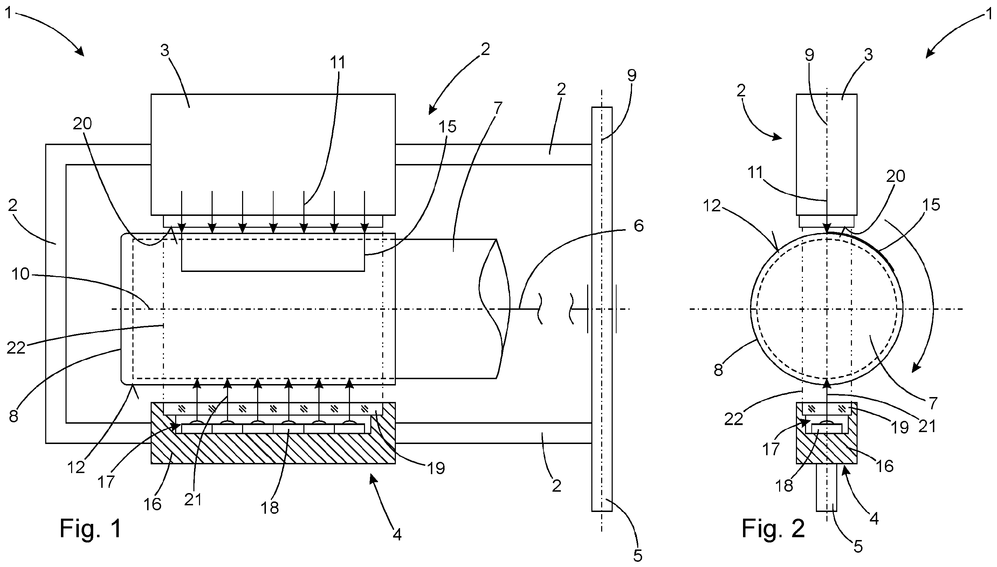

Eine in den Figuren 1 und 2 streng schematisch dargestellte Digitaldruckeinrichtung 1 umfasst einen nur rein schematisch dargestellten Druckkopfträger 2, an dem ein ebenfalls nur schematisch dargestellten Druckkopf 3 sowie eine schematisch dargestellte Trocknungseinheit 4 ortsfest angebracht sind. Der Druckkopfträger 2 ist mit einem ebenfalls nur schematisch dargestellten Maschinengestell 5 verbunden, das in nicht näher dargestellter Weise ortsfest auf einer nicht gezeigten Bodenplatte einer Fertigungshalle aufgestellt ist.

An dem Maschinengestell 5 ist eine nur symbolisch dargestellter Werkstückrundtisch 6drehbeweglich um eine Drehachse 9 gelagert, wobei der Werkstückrundtisch 6 in der Praxis beispielsweise scheibenförmig ausgebildet sein kann und an einer radial außen liegenden Umfangsfläche mit einer Vielzahl von radial ausgerichteten Spindeln versehen ist, von denen in der Figur 1 3 exemplarisch nur eine Spindel 7 gezeigt ist. Die Spindel 7 ist drehbar um eine Rotationsachse 10 am Werkstückrundtisch 6 aufgenommen und rein exemplarisch kreiszylindrisch profiliert ausgebildet. Die Spindel 7 dient zur Aufnahme eines rein exemplarisch kreishülsenförmig ausgebildeten Werkstücks 8, bei dem es sich beispielsweise um einen Kunststoffgefäß handeln kann, das aus einem transparenten oder transluzenten Kunststoffmaterial hergestellt ist.

Der Druckkopf 3 ist an einer gegenüberliegend zu einer Außenoberfläche 12 des Werkstücks 8 angeordneten Unterseite 20 hinter einer Vielzahl von nicht dargestellten Tintendüsen versehen, die entlang einer Geraden in gleicher Teilung angeordnet sind, wobei diese Gerade parallel zur Rotationsachse 10 ausgerichtet ist. Jede der Tintendüsen kann individuell von einer nicht dargestellten Steuereinrichtung für den Druckkopf 3 angesteuert werden und ermöglicht dadurch die Abgabe eines nicht dargestellten Tintentröpfchens in einer Druckrichtung 11. Rein exemplarisch sind die Spindel 7 mit den daran aufgenommenen Werkstück 8 und der Druckkopf 3 während einer Durchführung eines Druckvorgangs derart zueinander ausgerichtet, dass die Druckrichtung 11 identisch mit einer Flächennormalen auf die Außenoberfläche 12 des Werkstücks 8 ist. Durch die Anordnung der nicht dargestellten Tintendüsen kann der Druckkopf 3 eine frei wählbare Anzahl von Tintentröpfchen längs der Geraden, die parallel zur Rotationsachse 10 ausgerichtet ist, auf die Außenoberfläche 12 des Werkstücks 8 abgeben. Zur Erzeugung eines Druckbilds auf der Außenoberfläche 12 ist somit vorgesehen, eine Rotation des Werkstücks 8 um die Rotationsachse 10 vorzunehmen, so dass das Druckbild durch eine Vielzahl von nebeneinanderliegenden Tintentröpfchen geschaffen werden kann. Der vom Druckkopf 3 bedruckbare Bereich der Außenoberfläche 12 des Werkstücks 8 wird auch als Druckbereich 15 bezeichnet und hat die Form eines Kreismantelabschnitts.

Gegenüberliegend zur Druckkopf 3 ist die Trocknungseinheit 4 angeordnet, wie dies insbesondere aus der Darstellung der Figur 2 zu entnehmen ist. Die Trocknungseinheit 4 begrenzt zusammen mit den Druckkopf 3 einen Arbeitsraum 22, in den die mit dem jeweiligen Werkstück 8 versehene Spindel 7 durch eine Rotation des Werkstückrundtischs 6 um die Drehachse 9 eingeschwenkt werden kann. Hierzu vollzieht der Werkstückrundtisch 6 eine Drehschrittbewegung, bei der eine Abfolge einer Schwenkbewegung und einer Stillstandsphase vorgesehen ist, wobei die Bedruckung des Werkstücks 8 während der Stillstandsphase vorgenommen wird und das Werkstück 8 in dieser Stillstandsphase durch die Rotation der Spindel 7 um die Rotationsachse 10 in eine Relativbewegung gegenüber dem Drucckopf 3 versetzt wird.

Die Trocknungseinheit 4 umfasst ein Gehäuse 16, das mit einer Ausnehmung 17 versehen ist, in der rein exemplarisch mehrere als Leuchtdioden ausgebildete Strahlungsquellen 18 angeordnet sind. Jede der Strahlungsquellen 18 ist dabei für die Bereitstellung von elektromagnetischen Wellen mit einer spektralen Wellenlängenverteilung vorgesehen, bei der ein Intensitätsmaximum bei einer der Wellenlängen 395 Nanometer, vorzugsweise 385 Nanometer, insbesondere 365 Nanometer, liegt. Vorzugsweise sind sämtliche Strahlungsquellen 18 identisch ausgebildet und weisen dementsprechend jeweils die gleiche spektrale Wellenlängenverteilung auf.

Die Strahlungsquellen 18 sind derart ausgebildet und in der Ausnehmung 17 angeordnet, dass ein Zentralstrahl 21 der jeweiligen Strahlungsquelle 18, der diejenige Raumrichtung angibt, in der Strahlungsquelle 18 ihre maximale Intensität aufweist, parallel und insbesondere koaxial zur Druckrichtung 11 der jeweils gegenüberliegenden Tintendüse ausgerichtet ist.

Die Ausnehmung 17 im Gehäuse 16 ist mit einem Filter 19 abgedeckt, dessen optische Eigenschaften derart gewählt sind, dass Wellenlängen der von den Strahlungsquelle 18 bereitgestellten elektromagnetischen Wellen, die oberhalb einer vorgegebenen Cut-Off-Wellenlänge liegen, zumindest nahezu vollständig abgeblockt werden. Je nach Ausgestaltung des Filters 19 wird dies durch Absorption der elektromagnetischen Wellen oder durch Reflektion der elektromagnetischen Wellen erreicht. Rein exemplarisch ist vorgesehen, dass die Cut-Off-Wellenlänge des Filters 19 um wenige Nanometer oberhalb derjenigen Wellenlänge angesiedelt ist, bei der die Strahlungsquelle 18 ihr Intensitätsmaximum aufweist.

Das Werkstück 8 ist vorzugsweise aus einem optisch transparenten oder einem optisch transluzenten Werkstoff, insbesondere Glas oder Kunststoff oder einem Verbund aus Glas und Kunststoff, hergestellt und hat daher die Eigenschaft, dass sichtbares Licht das Werkstück 8 verlustarm passieren kann. Das Werkstück 8 bildet somit für elektromagnetische Wellen, die in einem Wellenlängenbereich von 380 Nanometer bis 780 Nanometer angesiedelt sind, einen Wellenleiter. Um nicht auf die Transparenz oder Transluzenz des Werkstücks 8 verzichten zu müssen und eine Weiterleitung von elektromagnetischen Wellen, die von der Trocknungseinheit 4 an die Außenoberfläche 12 des Werkstücks 8 zur Trocknung der Tintentröpfchen bereitgestellt werden, bis zum Druckkopf 3 zu vermeiden, ist das Werkstück 8 durch geeignete Materialauswahl in einer Weise gestaltet, durch die eine Weiterleitung von elektromagnetischen Wellen mit einer Wellenlänge kleiner 400 Nanometer, vorzugsweise mit einer Wellenlänge kleiner 390 Nanometer, insbesondere mit einer Wellenlänge kleiner 370 Nanometer zumindest weitgehend verhindert wird.

Derartige Eigenschaften können bei der Verwendung von Glas als Werkstoff für das Werkstück 8 durch entsprechende Absorber verwirklicht werden, die vorzugsweise derart beschaffen sind, dass sich durch die Absorber die übrigen Eigenschaften des verwendeten Glasmaterials nicht oder nur geringfügig verändern. Bei der Verwendung von Kunststoff für das Werkstück 8 können ebenfalls Absorber eingesetzt werden, die auf das jeweilige Kunststoffmaterial angepasst sind.

Dementsprechend ergibt sich bei einer gemeinsamen Betrachtung der Druckeinrichtung 1 und des Werkstücks 8 ein Drucksystem 30, das aufgrund der nachstehend zusammengefassten Eigenschaften eine Bedruckung von transparenten oder transluzenten Werkstücken im Tintenstrahldruckverfahren mit einer Gewährleistung langer Reinigungsintervalle für die Reinigung des Druckkopfs ermöglicht:
Die Tinte für die vom Druckkopf 3 durch die nicht dargestellten Tintenstrahldüsen in der Druckrichtung 11 auf den Druckbereich 15 des Werkstücks 8 abgegebenen Tintentröpfchen ist für eine Polymerisation mit elektromagnetischen Wellen konfiguriert, deren Wellenlängen kleiner 400 Nanometer, vorzugsweise kleiner 390 Nanometer, insbesondere kleiner 370 Nanometer sind.

Das Werkstück 8 ist aus einem transparenten Material, insbesondere Glas und/oder Kunststoff hergestellt, wobei die hierfür eingesetzten Werkstoffe eine zumindest teilweise Absorption für elektromagnetische Wellen, deren Wellenlängen kleiner 400 Nanometer, vorzugsweise kleiner 390 Nanometer, insbesondere kleiner 370 Nanometer sind, durch entsprechende Absorber gewährleisten.

Die wenigstens eine Strahlungsquelle 18 ist zur Bereitstellung von elektromagnetischen Wellen mit einem Intensitätsmaximum bei einer Wellenlänge von 395 Nanometer, vorzugsweise bei einer Wellenlänge von 385 Nanometer, insbesondere bei einer Wellenlänge von 365 Nanometer, ausgebildet.

Ferner ist vorgesehen, dass zwischen der wenigstens eine Strahlungsquelle 18 und dem vom Druckkopf 3 und der Trocknungseinheit 4 bestimmten Arbeitsraum 22 ein Filter 19 angeordnet ist, der als Kurzpassfilter mit einer Cut-Off-Wellenlänge größer als 400 Nanometer, vorzugsweise mit einer Cut-Off-Wellenlänge größer als 390 Nanometer, insbesondere mit einer Cut-Off-Wellenlänge größer als 370 Nanometer, ausgebildet ist.

## Patentansprüche

1. Digitaldruckeinrichtung (1) zur Bedruckung von Werkstücken (8), mit einem Druckkopfträger (2), an dem ein Druckkopf (3) zur Abgabe von Tintentröpfchen in einer Druckrichtung (11) und eine Trocknungseinheit (4) zur Aushärtung der Tintentröpfchen angebracht sind, wobei der Druckkopf (3) und die Trocknungseinheit (4) einen Arbeitsraum (22) begrenzen, in dem eine Aufbringung eines Druckbilds auf eine Außenoberfläche (12) eines Werkstücks (8) mit dem Druckkopf (3) und eine Trocknung des Druckbilds auf dem Werkstück (8) mit der Trocknungseinheit (4) vorgesehen ist, wobei die Trocknungseinheit (4) zur Bereitstellung elektromagnetischer Wellen für eine photochemische Polymerisation der Tintentröpfchen ausgebildet ist, wobei die Trocknungseinheit (4) eine Strahlungsquelle (18) umfasst, die zur Bereitstellung elektromagnetischer Wellen mit einem Intensitätsmaximum bei einer Wellenlänge von 395 Nanometer, vorzugsweise bei einer Wellenlänge von 385 Nanometer, ausgebildet ist, **dadurch gekennzeichnet, dass** zwischen der Strahlungsquelle (18) und dem Arbeitsraum (22) ein Kurzpassfilter (19) mit einer Cut-Off-Wellenlänge größer als 400 Nanometer angeordnet ist.

2. Digitaldruckeinrichtung nach Anspruch 1, **dadurch gekennzeichnet, dass** die Strahlungsquelle (18) als Leuchtdiode mit einem Halbleiter aus der Gruppe: Aluminiumnitrid, Aluminiumgalliumnitrid, Aluminiumgalliumindiumnitrid, Diamant, versehen ist, der zur Bereitstellung monochromatischer elektromagnetischer Wellen ausgebildet ist.

3. Digitaldruckeinrichtung nach Anspruch 1 oder 2, **dadurch gekennzeichnet, dass** die Strahlungsquelle (18) bei 50 Prozent der maximalen Strahlungsintensität für eine Bereitstellung von elektromagnetischen Wellen in einem Wellenlängenintervall von weniger als 13 Nanometer und/oder bei 25 Prozent der maximalen Strahlungsintensität für eine Bereitstellung von elektromagnetischen Wellen in einem Wellenlängenintervall von weniger als 20 Nanometer ausgebildet ist.

4. Digitaldruckeinrichtung nach Anspruch 1, 2 oder 3, der Kurzpassfilter (19) als Absorptionsfilter oder als dichroditischer Filter ausgebildet ist und/oder dass der Kurzpassfilter (19) eine Cut-Off-Wellenlänge größer als 390 Nanometer, insbesondere eine Cut-Off-Wellenlänge größer als 370 Nanometer, aufweist.

5. Digitaldruckeinrichtung nach Anspruch 1, 2, 3 oder 4, **dadurch gekennzeichnet, dass** der Druckkopfträger (2) an einem Maschinengestell (5) festgelegt ist, an dem eine Fördereinrichtung für Werkstücke, insbesondere ein drehbar am Maschinengestell (5) gelagerter Werkstückrundtisch (6), angeordnet ist, wobei die Fördereinrichtung für eine Bereitstellung eines Werkstücks (8) in den Arbeitsraum (22) sowie für eine Rotation des Werkstücks (8) im Arbeitsraum (22) um eine quer zur Druckrichtung (11) ausgerichtete Rotationsachse (10) ausgebildet ist.

6. Verfahren zum Herstellen und Bedrucken eines Werkstücks (8) aus einem transparenten oder transluzenten Werkstoff mit den Schritten: Bereitstellen eines Werkstücks (8) in einen Arbeitsraum (22) einer Digitaldruckeinrichtung (1), Abgeben von Tintentröpfchen vom einem Druckkopf (3) auf einen Druckbereich (15) einer Außenoberfläche (12) des Werkstücks und Erzeugen eines Druckbilds auf der Außenoberfläche (12) durch eine Rotation des Werkstücks (8) um eine Rotationsachse (10), Aushärten der Tintentröpfchen durch eine Bestrahlung zumindest eines Teilbereichs des Druckbilds mit elektromagnetischen Wellen, die von einer Strahlungsquelle (18) bereitgestellt werden, deren Intensitätsmaximum bei einer Wellenlänge von 395 Nanometer, vorzugsweise bei einer Wellenlänge von 385 Nanometer, liegt und dass zwischen der Strahlungsquelle (18) und dem Arbeitsraum (22) ein Kurzpassfilter (19) mit einer Cut-Off-Wellenlänge größer als 400 Nanometer angeordnet ist, und/oder dass das Werkstück (8) aus einem Glasmaterial hergestellt wird, das in einem Wellenlängenbereich kleiner 400 Nanometer eine optische Transmission von weniger als 25 Prozent, bevorzugt von weniger als 15 Prozent, insbesondere von weniger als 5 Prozent aufweist, und/oder dass das Werkstück (8) aus Kunststoff hergestellt wird, wobei der Kunststoff einen Absorber für ultraviolette Strahlung aufweist, der aus der Gruppe: 2-(2-Hydroxyphenyl)-2H-benzotriazole, (2-Hydroxyphenyl)-s-triazine, Hydroxybenzophenone, Oxalanilide, Titandioxid, Eisenoxid, Zinkoxid, Cadmiumstearat, ausgewählt ist, so dass ein Vordringen von elektromagnetischer Strahlung mit Wellenlägen größer 400 Nanometer bis zum Werkstück (8) und zum Druckkopf (3) vermieden wird.

7. Verfahren nach Anspruch 6, **dadurch gekennzeichnet, dass** bei der Rotation des Werkstücks (8) um die Rotationsachse (10) ein Abstand zwischen der Außenoberfläche (12) des Werkstücks (8), die mit dem Druckbild versehen wird, und dem Druckkopf (3) konstant ist.

8. System zur Bereitstellung von bedruckten Werkstücken (8), mit einer Digitaldruckeinrichtung (1) nach einem der Ansprüche 1 bis 5 und mit Werkstücken (8), die aus einem Glasmaterial hergestellt sind, das in einem Wellenlängenbereich kleiner 400 Nanometer eine optische Transmission für elektromagnetische Wellen von weniger als 25 Prozent, bevorzugt von weniger als 15 Prozent, insbesondere von weniger als 5 Prozent aufweist und/oder mit Werkstücken (8), die aus einem Kunststoff hergestellt sind, wobei der Kunststoff mit einem Absorber für ultraviolette Strahlung, insbesondere aus der Gruppe: 2-(2-Hydroxyphenyl)-2H-benzotriazole, (2-Hydroxyphenyl)-s-triazine, Hydroxybenzophenone, Oxalanilide, Titandioxid, Eisenoxid, Zinkoxid, Cadmiumstearat, versehen ist.

## Claims

1. Digital printing device (1) for printing workpieces (8), having a print head carrier (2) to which a print head (3) for dispensing ink droplets in a printing direction (11) and a drying unit (4) for curing the ink droplets are attached, wherein the printing head (3) and the drying unit (4) define a working space (22) in which an application of a printing image to an outer surface (12) of a workpiece (8) with the printing head (3) and a drying of the printing image on the workpiece (8) with the drying unit (4) is provided, the drying unit (4) being designed to provide electromagnetic waves for photochemical polymerization of the ink droplets, and wherein the drying unit (4) comprises a radiation source (18) which is designed to provide electromagnetic waves having an intensity maximum at a wavelength of 395 nanometers, preferably at a wavelength of 385 nanometers, **characterized in that** a short-pass filter (19) with a cut off wavelength greater than 400 nanometers is arranged between the radiation source (18) and the working chamber (22).

2. Digital printing device according to claim 1, **characterized in that** the radiation source (18) is a light-emitting diode comprising a semiconductor from the group: aluminum nitride, aluminum gallium nitride, aluminum gallium indium nitride, diamond, which is designed to provide monochromatic electromagnetic waves.

3. Digital printing device according to claim 1 or 2, **characterized in that** the radiation source (18) is configured at 50 percent of the maximum radiation intensity for providing electromagnetic waves in a wavelength interval of less than 13 nanometers and/or at 25 percent of the maximum radiation intensity for providing electromagnetic waves in a wavelength interval of less than 20 nanometers.

4. Digital printing device according to claim 1, 2 or 3, **characterized in that** the short-pass filter (19) is an absorption filter or a dichroditic filter and/or the short-pass filter (19) has a cut-off wavelength greater than 390 nanometers, in particular greater than 370 nanometers.

5. Digital printing device according to claim 1, 2, 3 or 4, **characterized in that** the print head carrier (2) is fixed to a machine frame (5) on which a conveying device for workpieces, in particular a workpiece rotary table (6) rotatably mounted on the machine frame (5), is arranged, the conveying device being designed for supplying a workpiece (8) into the working space (22) and for rotating the workpiece (8) in the working space (22) about an axis of rotation (10) oriented transversely to the printing direction (11).

6. Method for producing and printing a workpiece (8) from a transparent or translucent material, having the steps: Providing a workpiece (8) in a working space (22) of a digital printing device (1), dispensing ink droplets from a print head (3) onto a printing area (15) of an outer surface (12) of the workpiece and producing a printed image on the outer surface (12) by rotating the workpiece (8) about an axis of rotation (10), curing the ink droplets by irradiating at least a partial area of the print image with electromagnetic waves provided by a radiation source (18) whose intensity maximum is at a wavelength of: 395 nanometers, preferably at a wavelength of 385 nanometers, and wherein a short-pass filter (19) is located between the radiation source (18) and the working space (22) having a cut-off wavelength greater than 400 nanometers and/or wherein the workpiece (8) is made of a glass material which, in a wavelength range smaller than 400 nanometers, has an optical transmission of less than 25 percent, preferably of less than 15 percent, in particular of less than 5 percent and/or wherein the workpiece (8) is made of plastic, the plastic comprising an absorber for ultraviolet radiation selected from the group: 2-(2-hydroxyphenyl)-2H-benzotriazoles, (2-hydroxyphenyl)-s-triazines, hydroxybenzophenones, oxalanilides, titanium dioxide, iron oxide, zinc oxide, cadmium stearate, so that the penetration of electromagnetic radiation with wavelengths greater than 400 nm to the workpiece (8) and the print head (3) is avoided.

7. process according to claim 6, **characterized in that** during the rotation of the workpiece (8) about the axis of rotation (10), a distance between the outer surface (12) of the workpiece (8), which is provided with the printed image, and the print head (3) is constant.

8. System for providing printed workpieces (8), having a digital printing device (1) according to one of claims 1 to 5 and having workpieces (8) which are produced from a glass material which, in a wavelength range smaller than 400 nanometers, has an optical transmission for electromagnetic waves of less than 25 percent, preferably of less than 15 percent, in particular of less than 5 percent, and/or having workpieces (8) which are produced from a plastic, the plastic being provided with an absorber for ultraviolet radiation, in particular from the group: 2-(2-hydroxyphenyl)-2H-benzotriazoles, (2-hydroxyphenyl)-s-triazines, hydroxybenzophenones, oxalanilides, titanium dioxide, iron oxide, zinc oxide, cadmium stearate.

## Revendications

1. Dispositif d'impression numérique (1) pour l'impression de pièces (8), avec un support de tête d'impression (2), sur lequel sont disposées une tête d'impression (3) destinée à distribuer des gouttelettes d'encre dans une direction d'impression (11) et une unité de séchage (4) destinée à durcir les gouttelettes d'encre, dans lequel la tête d'impression (3) et l'unité de séchage (4) délimitent un espace de travail (22) dans lequel une application d'une image d'impression sur une surface extérieure (12) d'une pièce (8) avec la tête d'impression (3) et un séchage de l'image imprimée sur la pièce (8) avec l'unité de séchage (4) sont prévus, dans lequel l'unité de séchage (4) est réalisée pour fournir des ondes électromagnétiques pour une polymérisation photochimique des gouttelettes d'encre, dans lequel l'unité de séchage (4) comprend une source de rayonnement (18) qui est réalisée pour fournir des ondes électromagnétiques d'une intensité maximale à une longueur d'onde de 395 nanomètres, de préférence à une longueur d'onde de 385 nanomètres, **caractérisé en ce qu'**un filtre passe-bas (19) d'une longueur d'onde de coupure supérieure à 400 nanomètres est disposé entre la source de rayonnement (18) et l'espace de travail (22).

2. Dispositif d'impression numérique selon la revendication 1, **caractérisé en ce que** la source de rayonnement (18) est pourvue en tant que diode électroluminescente d'un semi-conducteur issu du groupe : nitrure d'aluminium, nitrure d'aluminium-gallium, nitrure d'aluminium-gallium-indium, diamant, qui est réalisé pour fournir des ondes électromagnétiques monochromatiques.

3. Dispositif d'impression numérique selon la revendication 1 ou 2, **caractérisé en ce que** la source de rayonnement (18) est réalisée à 50 % de l'intensité de rayonnement maximale pour fournir des ondes électromagnétiques dans un intervalle de longueur d'onde inférieur à 13 nanomètres et/ou à 25 % de l'intensité de rayonnement maximale pour fournir des ondes électromagnétiques dans un intervalle de longueur d'onde inférieur à 20 nanomètres.

4. Dispositif d'impression numérique selon la revendication 1, 2 ou 3, dans lequel le filtre passe-bas (19) est réalisé en tant que filtre d'absorption ou en tant que filtre dichroïque et/ou le filtre passe-bas (19) présente une longueur d'onde de coupure supérieure à 390 nanomètres, en particulier une longueur d'onde de coupure supérieure à 370 nanomètres.

5. Dispositif d'impression numérique selon la revendication 1, 2, 3 ou 4, **caractérisé en ce que** le support de tête d'impression (2) est fixé sur un bâti de machine (5) sur lequel est disposé un dispositif de transport de pièces, en particulier une table tournante à pièces (6) montée de manière à pouvoir tourner sur le bâti de machine (5), dans lequel le dispositif de transport pour fournir une pièce (8) dans l'espace de travail (22) ainsi que pour faire tourner la pièce (8) dans l'espace de travail (22) autour d'un axe de rotation (10) orienté transversalement à la direction d'impression (11).

6. Procédé de fabrication et d'impression d'une pièce (8) à partir d'un matériau transparent ou translucide avec les étapes : de fourniture d'une pièce (8) dans un espace de travail (22) d'un dispositif d'impression numérique (1), de distribution de gouttelettes d'encre par une tête d'impression (3) sur une zone d'impression (15) d'une surface extérieure (12) de la pièce et de génération d'une image d'impression sur la surface extérieure (12) par rotation de la pièce (8) autour d'un axe de rotation (10), de durcissement des gouttelettes d'encre par un rayonnement d'au moins une zone partielle de l'image d'impression avec des ondes électromagnétiques qui sont fournies par une source de rayonnement (18) dont l'intensité maximale est à une longueur d'onde de 395 nanomètres, de préférence à une longueur d'onde de 385 nanomètres, et un filtre passe-bas (19) avec une longueur d'onde de coupure supérieure à 400 nanomètres étant disposé entre la source de rayonnement (18) et l'espace de travail (22), et/ou la pièce (8) étant fabriquée à partir d'un matériau en verre, qui présente, dans une plage de longueurs d'onde inférieure à 400 nanomètres, une transmission optique inférieure à 25 %, de préférence inférieure à 15 %, en particulier inférieure à 5 %, et/ou la pièce (8) étant fabriquée à partir d'une matière plastique, dans lequel la matière plastique présente un absorbeur de rayonnement ultraviolet choisi parmi le groupe : 2-(2-hydroxyphényl)-2H-benzotriazole, (2-hydroxyphényl)-s-triazine, hydroxybenzophénone, oxalanilides, dioxyde de titane, oxyde de fer, oxyde de zinc, stéarate de cadmium de manière à éviter une pénétration de rayonnement électromagnétique avec une longueur d'onde supérieure à 400 nanomètres jusqu'à la pièce (8) et la tête d'impression (3).

7. Procédé selon la revendication 6, **caractérisé en ce que** lors de la rotation de la pièce (8) autour de l'axe de rotation (10), une distance est constante entre la surface extérieure (12) de la pièce (8), qui est pourvue de l'image d'impression, et la tête d'impression (3).

8. Système de fourniture de pièces (8) imprimées, avec un dispositif d'impression numérique (1) selon l'une quelconque des revendications 1 à 5 et avec des pièces (8), qui sont fabriquées à partir d'un matériau en verre, qui présente dans une plage de longueurs d'onde inférieure à 400 nanomètres une transmission optique pour ondes électromagnétiques inférieure à 25 %, de préférence inférieure à 15 %, en particulier inférieure à 5 % et/ou avec des pièces (8), qui sont fabriquées à partir d'une matière plastique, dans lequel la matière plastique est pourvue d'un absorbeur de rayonnement ultraviolet, en particulier issu du groupe : 2-(2-hydroxyphényl)-2H-benzotriazole, (2-hydroxyphényl)-s-triazine, hydroxybenzophénone, oxalanilides, dioxyde de titane, oxyde de fer, oxyde de zinc, stéarate de cadmium.
